# EUROPEAN PATENT SPECIFICATION

(11) **EP 2 891 347 B1**
(45) Date of publication and mention of the grant of the patent: **09.10.2019**
(21) Application number: 12883827.3
(22) Date of filing: 28.08.2012
(51) Int. Cl.: H04W 8/00, H04L 29/08, H04W 84/18, H04W 4/02, H04W 4/20, H04W 40/24, H04W 64/00, H04W 8/22

(54) **DISCOVERY METHOD AND SYSTEM FOR DISCOVERY**
ENTDECKUNGSVERFAHREN UND SYSTEM ZUR ENTDECKUNG
PROCÉDÉ DE DÉCOUVERTE ET SYSTÈME DESTINÉS À LA DÉCOUVERTE

(43) Date of publication of application: 08.07.2015
(73) Proprietor: Nokia Technologies Oy, 02610 Espoo (FI)
(72) Inventor: KUUSILINNA, Kimmo, FI-33540 Tampere (FI); AALTONEN, Timo, FI-33210 Tampere (FI); LEPPÄNEN, Tapani, FI-33710 Tampere (FI)
(74) Representative: Ruuskanen, Juha-Pekka
(86) International application number: PCT/FI2012/050818
(87) International publication number: WO 2014/033350

(56) References cited:
- EP-A1- 2 853 105
- WO-A1-2004/004395
- WO-A1-2012/114161
- WO-A2-2012/092407
- US-A1- 2005 188 062
- US-A1- 2006 046 709
- US-A1- 2011 317 586

## Description

### Background

As the capabilities of portable computers and communication devices develop, new ways of collaboration have become possible. For example, in addition to sending information from one device to another via a mobile communication network, devices may be able to communicate directly from device to device, or use a local network such as WLAN to send information to each other. Users of these devices may thus be able to work together utilizing such device-to-device communication. To be able to do so, the devices need to be connected to each other over a communication channel. Current ways of manually searching for devices to which a connection can be formed are sometimes cumbersome and inefficient.

There is, therefore, a need for solutions that provide for efficient ways to discover devices that are in the vicinity of the user's device.

US 20060046709A1 describes a wireless (Wi-Fi) network comprising a server, clients and mechanisms that compute lists of other clients and resources that are physically nearby. Clients report Wi-Fi access points' signal strengths to a server, which uses that data to compute the proximity of resources to one another, including an estimate the distance between resources. The data may be returned to the client as a list of resources within short range proximity, or resources within long-range proximity, with an approximate time to that resource based on previous clients' reporting.

WO 2004004395 A1 discloses detecting one or more terminals located within the range of the same wireless short-range connection. The terminals have pre-registered to the proximity service comprised by server, having thus obtained a proximity service identifier. The terminals are arranged to form a wireless short-range connection with each other, and at least one of the terminals are arranged to form a connection to server. At least one terminal detects a second terminal by using a wireless short-range connection. One of the terminals sends its proximity service identifier to the other terminal in response to a proximity service identifier request. The terminal that has received the proximity service identifier of the other terminal sends to server' information that the other terminal is located within the range of the same wireless short-range connection, i.e. so called proximity data, which is stored in server.

US 20050188062 A1 discloses a network of clients and a server. The clients can discover and be discovered by each other. Discovery includes emitting requests to and acquiring identifying information from clients within a certain geographical range. A discovering client sends all identifying information to the server. The server includes client information database and topological map, comprised of nodes representing clients and edges indicating the discovery of one client by another.

When the server receives identifying information from the discovering client, the server updates the topological map and determines which neighboring clients of the discovering client matches the match criteria of the discovering client. The server may determine a discovery schedule detailing which client should discover next. The server may send the match information and discovery schedule to the discovering client, discovered clients, or a third party. The server may also store this information

### Summary

Now there has been invented an improved method and technical equipment implementing the method, by which the above challenge is alleviated. Various aspects of the invention include methods, apparatuses, systems and computer program products comprising computer programs, which are characterized by what is stated in the independent claims. Various embodiments of the invention are disclosed in the dependent claims.

The invention relates to methods, apparatuses, systems and computer program products for discovery of nearby devices. To facilitate discovery of nearby, i.e. proximal, devices, after receiving a trigger signal, that is, a signal related to a user action, proximity of other devices is determined and a proximity fingerprint is formed from this information, for example to be stored in a fingerprint database. When a change in a proximity information of a device is detected, proximity fingerprints are accessed and the fingerprints are searched for in the current proximity information of the user device. In this manner, the user may be alerted or programs (or the system) may be controlled when a stored proximity fingerprint is detected in the current set of nearby devices. The discovery of proximal devices may be orchestrated by a proximity server, and a proximity server may determine or provide information for determining whether a certain device or a group of devices is in the vicinity. The proximity server, or a user device may, for example, use a proximity graph for representing proximity of devices with each other and for searching for proximity fingerprints.

### Description of the Drawings

In the following, various embodiments of the invention will be described in more detail with reference to the appended drawings, in which
- Figs. 1a and 1b: show flow charts of methods according to example embodiments;
- Figs. 2a and 2b: show a system and devices according to example embodiments;
- Figs. 3a and 3b: show example systems for proximity-based services;
- Figs. 4a and 4b: show proximity graphs according to example embodiments;
- Fig. 4c: illustrates finding a proximity fingerprint of interest according to an example embodiment;
- Figs. 5a, 5b, 5c, 5d, 5e and 5f: illustrate proximity fingerprint storing and detection according to example embodiments;
- Figs. 6a and 6b: show flow charts for discovery of proximal devices by employing proximity fingerprints according to example embodiments.

### Description of Example Embodiments

In the following, several embodiments of the invention will be described in the context of discovery of proximal devices. It is to be noted, however, that the invention is not limited to discovery. In fact, the different embodiments have applications widely in any environment where optimization of forming communication connections between devices is required.

In the following, the various embodiments are explained with reference to systems that utilize proximity of other devices, e.g. sharing and multi-player game applications. Proximity of other devices may be detected e.g. when the application is started, or using another condition for finding nearby device, that is, a discovery may be carried out. An application may try to e.g. create a Bluetooth connection to other devices for peer-to-peer communication. In various embodiments, there may be a system of proximity-based services where the services are typically joint actions for several devices collaborating based on their proximity, that is, actions and services are available depending on other devices that are nearby.

For example, there may be envisioned smart space concepts in nomadic environments based on devices that are in the proximity of each other. There may not be many devices/services that are fixed in the space, and the proximity and connection configuration may be changing when devices are moving. For such envisioned concepts it may be useful to find out which devices are in the proximity of each other. The various embodiments may be applied to group forming, as well. Many multi-user or collaborative applications and services require a notion of a group of users/devices. The embodiments may be used for a real-world based group forming technique, that is, to find devices/people that are nearby. Sharing and other collaborative applications may then utilize ad hoc groups formed in such manner.

Proximity information may be sensed by the devices using short range radios, light, sound etc., to find other devices that are in the proximity. Positioning techniques (GPS, indoor positioning) may be used, as well. In addition, some use cases may utilize additional information in addition to the proximity (distance) - it may be useful to know e.g. which devices are in the same room so that they can interact with each other. Proximity sensing based on radio signals may lack this information and other techniques may be used, e.g. audio beacon or light (e.g. infrared).

For some use cases it may be sufficient that one device is searching the nearby devices once an application or a task is launched. The proximity sensing may be quite slow, e.g. with Bluetooth it may take several tens of seconds, depending on the number of devices in the proximity. In a general case, for prolonged use and for faster response, the proximity information may be kept up-to-date all the time. The proximity information may be presented as a graph where a node denotes a device and an edge denotes the proximity.

Proximity of other devices may be utilized on a device by device basis, e.g. to form a connection for transferring data from a user's device to another device. In the various example embodiments, proximity fingerprints of mobile radio sources and possibly other sources may be used to determine and discover other contexts than pure geographic location. That is, since mobile radio sources are indeed mobile, a proximity fingerprint based on them may not be useful for determining an absolute geographic location or even a relative position. However, the detection of a proximity fingerprint in the vicinity of the user's device may imply that a group of other devices may be available for connections. Mobile radio sources include such transmitters as phone Bluetooth and a Wi-Fi hotspot offered by a cellphone. Other contexts than location may include specific groups e.g. friends, colleagues, or family; ad hoc collection of devices; and task-oriented contexts e.g. gaming. An ensemble of both a place and the people in it (or in fact the devices of the people) may be used to trigger actions and new options in a computer system, e.g. in a computer application.

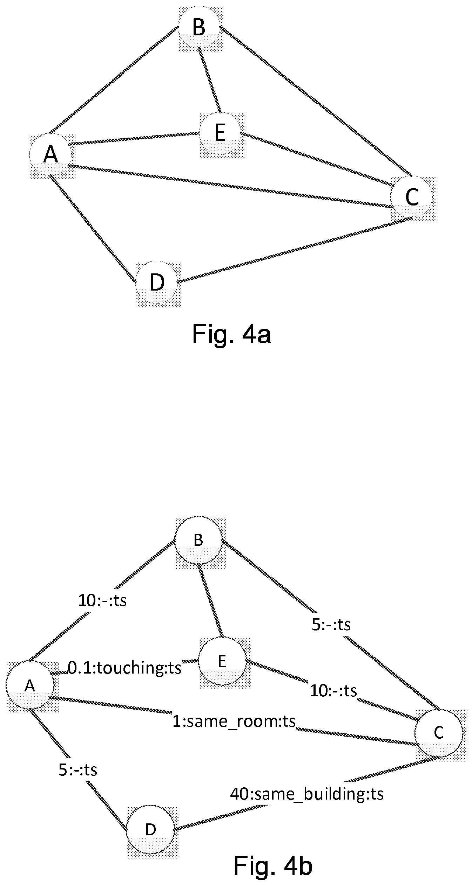

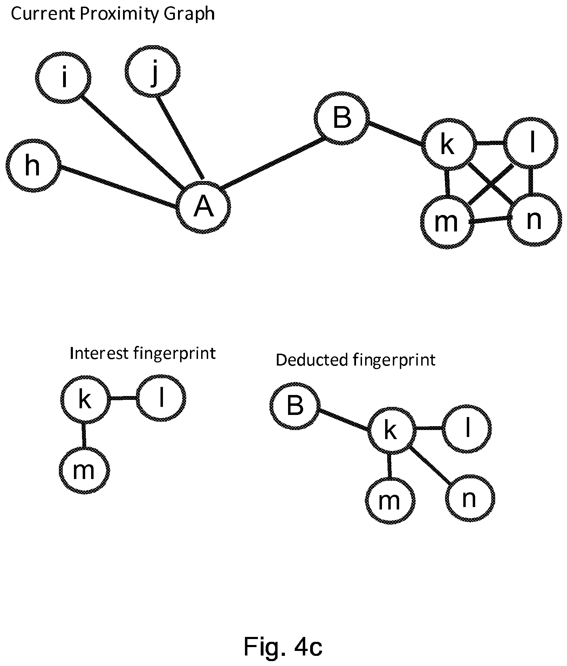

A proximity fingerprint may be understood to be a set of information descriptive of two or more devices being in the proximity of each other. The proximity fingerprint may e.g. comprise a list of identifiers of devices (their radio identifiers). The proximity fingerprint may also comprise information of connectivity or proximity between the devices, and/or e.g. distance information of distance or signal strength between devices. The proximity fingerprint may have various representations, e.g. a list representation or a representation suitable for storing a graph. Proximity graphs are explained in more detail in context of Figs. 4a, 4b and 4c.

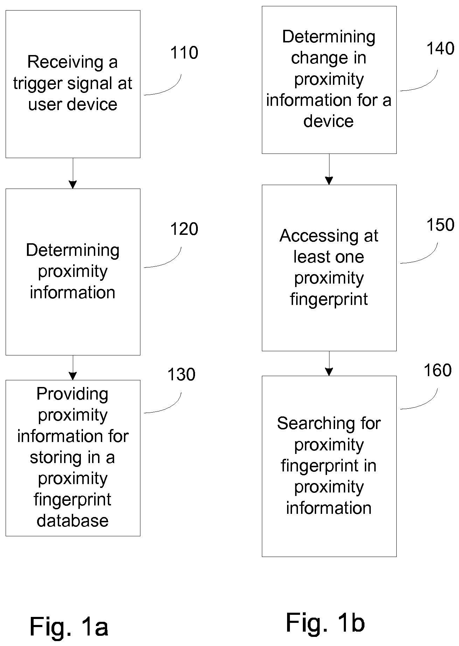

Figs. 1a and 1b show flow charts of methods according to example embodiments. In phase 110, a trigger signal may be received. This may happen at a user device e.g. so that a user operates on a user interface to cause a trigger signal to be received. The trigger signal may also be caused as a result of another user action, for example a user performing an act in a software application, such as carrying out a search in an internet browser. The trigger signal may be received at a user device, or the trigger signal may be received in a network, e.g. by a network server or at a network service. A signal derived from a trigger signal may also be received at a server or service.

In phase 120, proximity information may be determined. Determining proximity information may happen by carrying out proximity discovery by a user device. Proximity discovery may happen so that it is orchestrated by a proximity server. Alternatively or in addition, determining proximity information may happen at a server by analyzing available proximity information. For example, a proximity graph may be traversed to determine proximity information, and/or proximity information may be obtained from various user devices and analyzed. This proximity information may constitute a proximity fingerprint, as explained above. The proximity fingerprint corresponds to a group of devices (a group of users), that is, the proximity fingerprint is information on a group of devices or people.

In phase 130, the determined proximity information may be provided to be stored in a proximity fingerprint database. That is, a proximity fingerprint comprising proximity information that a number of devices are in proximity of each other may be stored or provided to be stored in a proximity fingerprint database. For example, a user device may store a proximity fingerprint in a file, for example in connection with other proximity fingerprints. A user device may send or provide into an interface one or more proximity fingerprints so that they may be stored at a server. A server may access proximity fingerprints from user devices, or a server may have formed proximity fingerprints, and the server may then store or provide the fingerprints for storing in a fingerprint database (e.g. a file, a directory, or a relational database).

In Fig. 1b, using proximity fingerprints is depicted. In phase 140, a change in proximity information for a device is determined. The determining may happen e.g. by carrying out proximity discovery at a user device or a number of user devices, possibly orchestrated by a proximity server. The determining may happen also by analyzing proximity information at a server or in a service. For example, proximity graph may be traversed to determine whether a change has occurred in the graph. Changes in the graph may also be flagged when a change happens (upon storing the graph) so that analysis of the graph is not needed at the time of determining.

In phase 150, at least one proximity fingerprint may be accessed e.g. from a memory and/or from a proximity fingerprint database. For example, a proximity fingerprint may be in a file or database on a user device, whereby it can be accessed by a user device or by a service/server from that location over a communication connection. A proximity fingerprint may also reside on a server or in a service (in a file or in a database on the network) whereby a user device or a server may access the proximity fingerprint from the network over a communication interface. When one or more proximity fingerprints have been accessed, they may reside in a memory accessible to one or more programs.

In phase 160, the accessed proximity fingerprint(s) may be used for carrying out a search. That is, the available (current, past or predicted) proximity information may be searched for one or more proximity fingerprints. In case one or more fingerprints are found, or at least partially found, in the proximity information, an action may be taken in response. For example, a message may be displayed or a program may be caused to carry out an operation. The searching may happen at a user device, or at a server, at both, or partially at both, or distributed across a number of devices and/or servers/services. The search may result e.g. in information that a certain predetermined group of people (corresponding to a proximity fingerprint) is nearby.

An example of using predetermined groups may be a virtual assistant. For instance, when a web search is made, the radio fingerprint (proximity fingerprint) may be stored in a database with the search parameters. The database manager may also hard-code fingerprints to correspond to specific searches, e.g. for advertising purposes. If this fingerprint (or a relevant subset) is encountered again by the same or a different user, the virtual assistant can suggest the previously made search and pre-fetch the results.

The system may comprise a fingerprint database that has persistent history, for example for predicting user movements based on previous paths through the radio source fingerprint space. If there are known user device radio source fingerprints along the predicted path in the database, the system may inform the user about potential social contexts. Like explained above, predictive searches and pre-fetched results may also be offered.

The concept of ad hoc collection of devices can be understood to comprise forming contexts on the fly. E.g. social "like" button on a user terminal interface may be envisioned. When a person is having fun with a group of people, he/she may press this button. This would cause the system to register the proximity fingerprint as a fun context and remind the user of that when the fingerprint is encountered again. Alternatively, there may be a game to collect as many "likes" from other users as possible. The button may also be used as a way to form a group that is subsequently associated with some social network (e.g. a circle in Google+). That is, the radio fingerprint is analysed to find the user information behind the devices, and a group is formed in a social network service.

In a task-oriented context setting there may be a task or an option that only materializes under specific conditions. For example, a game where you have to find other players to unlock a new level and subsequently to resolve that level together may be envisioned. As another example, a reminder may be provided to a work crew of an assignment when the specified people (according to a proximity fingerprint) are all in the same place at the same time.

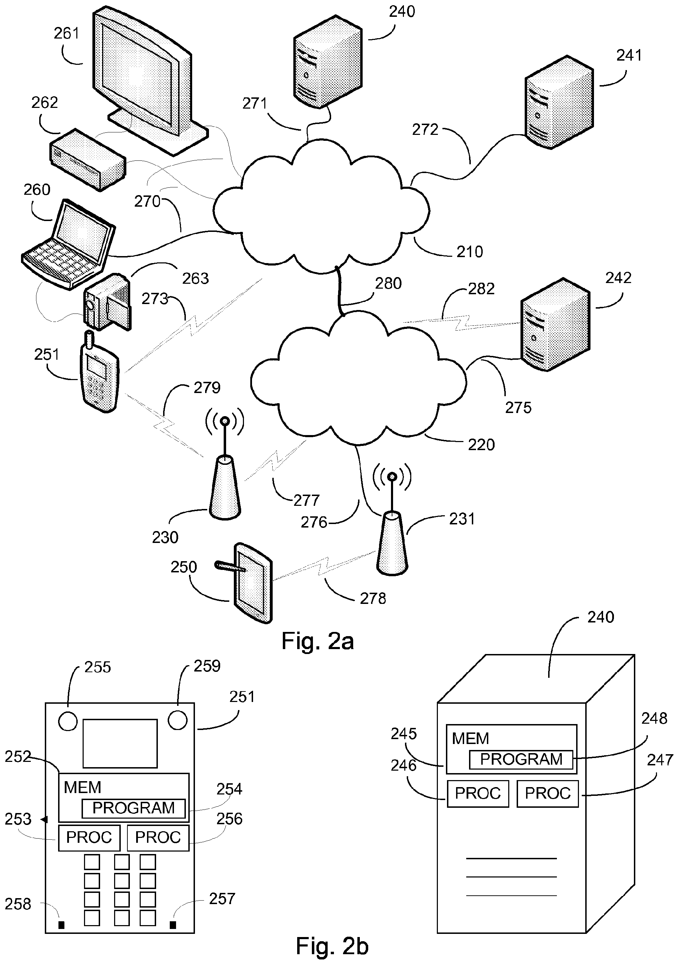

Figs. 2a and 2b show a system and devices for controlling discovery according to an embodiment. In Fig. 2a, the different devices may be connected via a fixed network 210 such as the Internet or a local area network; or a mobile communication network 220 such as the Global System for Mobile communications (GSM) network, 3rd Generation (3G) network, 3.5th Generation (3.5G) network, 4th Generation (4G) network, Wireless Local Area Network (WLAN), Bluetooth®, or other contemporary and future networks. Different networks are connected to each other by means of a communication interface 280. The networks comprise network elements such as routers and switches to handle data (not shown), and communication interfaces such as the base stations 230 and 231 in order for providing access for the different devices to the network, and the base stations 230, 231 are themselves connected to the mobile network 220 via a fixed connection 276 or a wireless connection 277.

There may be a number of servers connected to the network, and in the example of Fig. 2a are shown a server 240 for offering a network service for proximity service and controlling proximal discovery and connected to the fixed network 210, a server 241 for processing (e.g. filtering) proximity data and connected to the fixed network 210, and a server 242 for offering a network service e.g. a social networking service and connected to the mobile network 220. Some of the above devices, for example the computers 240, 241, 242 may be such that they make up the Internet with the communication elements residing in the fixed network 210.

There are also a number of end-user devices such as mobile phones and smart phones 251, Internet access devices (Internet tablets) 250, personal computers 260 of various sizes and formats, televisions and other viewing devices 261, video decoders and players 262, as well as video cameras 263 and other encoders. These devices 250, 251, 260, 261, 262 and 263 can also be made of multiple parts. The various devices may be connected to the networks 210 and 220 via communication connections such as a fixed connection 270, 271, 272 and 280 to the internet, a wireless connection 273 to the internet 210, a fixed connection 275 to the mobile network 220, and a wireless connection 278, 279 and 282 to the mobile network 220. The connections 271-282 are implemented by means of communication interfaces at the respective ends of the communication connection.

Proximity fingerprints may be stored in any of the user devices, or in any of the servers, and accessed from there over a communication connection or internally in the device. Likewise, a search for a proximity fingerprint among proximity information may be carried out in any user device or in any server, or in a distributed manner.

Fig. 2b shows devices for proximal device discovery according to an embodiment. As shown in Fig. 2b, the server 240 contains memory 245, one or more processors 246, 247, and computer program code 248 residing in the memory 245 for implementing, for example, proximity service functionality. The different servers 241, 242 may contain at least these same elements for employing functionality relevant to each server. Similarly, the end-user device 251 contains memory 252, at least one processor 253 and 256, and computer program code 254 residing in the memory 252 for implementing, for example, discovery of proximal devices. The end-user device may also have one or more cameras 255 and 259 for capturing image data, for example video. The end-user device may also contain one, two or more microphones 257 and 258 for capturing sound. The different end-user devices 250, 260 may contain at least these same elements for employing functionality relevant to each device. The end user devices may also comprise a screen for viewing a graphical user interface. The end-user devices and servers may also comprise various communication modules or communication functionalities implemented in one module for communicating with other devices and for carrying out discovery of nearby devices.

The various end-user devices and servers may take the form of communication devices, or other devices having communication capability. For example, the devices may be toys, home appliances like kitchen machines, entertainment devices (TV, music/media devices), or even parts of the building, clothes, vehicles, or any other devices that may communicate with each other and whose discovery may thus be carried out.

It needs to be understood that different embodiments allow different parts to be carried out in different elements. For example, determining proximity information or carrying out a discovery may be carried out entirely in one user device like 250, 251 or 260, or in one server device 240, 241, or 242, or across multiple user devices 250, 251, 260 or across multiple network devices 240, 241, 242, or across both user devices 250, 251, 260 and network devices 240, 241, 242. For example, the proximity fingerprint may be formed and stored in one device, the discovery of proximal devices may happen in another device and the search for the fingerprint may be carried out in a third device (e.g. a server). The relevant software for carrying out the functionality may reside on one device or distributed across several devices, as mentioned above, for example so that the devices form a so-called cloud.

The different embodiments may be implemented as software running on mobile devices and optionally on servers. The mobile phones may be equipped at least with a memory, processor, display, keypad, motion detector hardware, and communication means such as 2G, 3G, WLAN, or other. The different devices may have hardware like a touch screen (single-touch or multi-touch) and means for positioning like network positioning or a global positioning system (GPS) module. There may be various applications on the devices such as a calendar application, a contacts application, a map application, a messaging application, a browser application, a gallery application, a video player application and various other applications for office and/or private use. The devices may have various communication modules for communicating with other devices and discovering proximal devices.

The proximity server may maintain a proximity graph for use in various services. The proximity information may be filtered for various services, e.g. a dating service, and this filtering may happen at the proximity server or at another unit. A service server (e.g. for the dating service) may receive notifications of changes in devices' proximity groups from the filtering unit and produce the actual service which is visible to the end user. In the various embodiments, the proximal discovery of other devices may be controlled and orchestrated e.g. by the proximity server or another server.

In a proximity service provided by the proximity server a device notices e.g. through discovery with a short-range radio that it is in another device's proximity and communicates this information to the proximity server that in turn provides this information for use in services based on proximity. The system may provide and use proximity information for e.g. proximity gaming, messaging, media streaming between devices etc. The proximity information may comprise information like discovered device identifications, WiFi access point information, cellular network cell id and such. The server may create a proximity graph.

Devices may discover other devices in the proximity using several heterogeneous techniques and provide this information to a proximity server. The proximity server may store and maintain the proximity information up-to-date, e.g. as a graph or more specifically, a data structure storing connection information (edges) between nodes and connection attributes. Radio-based environment fingerprinting (e.g. RSSI and device identification information) may be reported to the proximity server as well. This fingerprinting information may be collected during normal communication operation, and hence no position or local connection related measurements may be needed. The proximity server may combine this fingerprinting information reported by different devices and orchestrate local measurements based on this information.

The proximity server may orchestrate the devices' discovery based on the current and past proximity information, e.g. the proximity graph. This may allow global optimization for the proximity discovery (sensing) to reduce power consumption, discovery collisions, and to get more accurate proximity information by controlling the use of heterogeneous sensing technologies available on the devices. For example, the server may instruct or control the devices to use a certain discovery technique (WLAN, Bluetooth, sound beacon, infrared beacon) and/or a certain power (e.g. radio transmission power, sound volume), and also regulate which devices and when will perform the discovery. This controlling or instructing may happen by using a discovery control signal, e.g. sending parameters to the devices on how they perform discovery, and the devices may then use these parameters. The devices may also modify the received parameters or discovery control information.

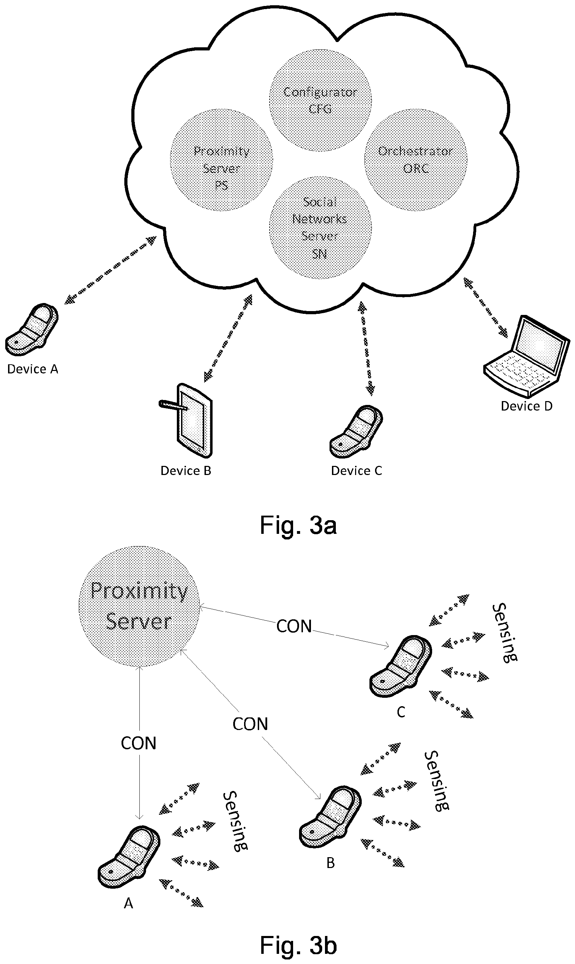

Figs. 3a and 3b show example systems for proximity-based services. One system for proximity-based services is presented in Fig. 3a. Proximity Server PS may orchestrate proximity sensing and maintain a proximity graph of devices as explained later in this description. The joint actions/collaborative applications, in which the devices participate, may have a precondition requiring that devices are, e.g. 1) in the proximity of each other (PS), 2) "friends", or more accurately they belong to the same social group or their social distance is smaller than a given threshold, e.g. the human owners are friends/in the same group, they are friends of a friend etc., and/or 3) capable to perform their part or role in the joint action/collaborative application, e.g. in an interaction dialog devices need to be able to communicate with each other.

A social network server SN may provide social network information. A configurator CFG may take the information from SN and PS, and the configurator CFG itself may have information about each device's capabilities. Combining this information with the precondition of each action, the configurator CFG may produce a list of possible actions fulfilling the preconditions. An action is picked from the list of possible actions based on e.g. some ranking algorithm. The orchestrator ORC may be responsible for executing the action by sending a control signal to participating devices to execute a role as specified in the action description, e.g. Device A has a storage containing a JPEG image (a photo source), Device B is a public display (sink for JPEG images).

Fig. 3b presents one system configuration. A proximity Server PS may store the discovery data sensed by the Device A, B and C. There may be a two-way connection "CON" between each device and the Proximity Server, or transport of information may be arranged in another manner, e.g. using a packet network. Devices may be using various, heterogeneous techniques to discover the proximity of other devices, e.g. Bluetooth discovery, WLAN access point information, cellular base station information, GPS and other satellite-based location information, various indoor positioning techniques (based on e.g. WLAN, BT) and/or light or sound beacons (beacons fixed in the space or one mobile device acting as a beacon). The proximity server PS may post-process the discovery data.

When a device joins the system, the proximity server may create a representation of the device - e.g. a node in a graph. In the simplest form, the server may control each device by sending a discovery control signal to the device instructing when (or how often) the device should sense its surroundings to perform a discovery, and which technology to use, e.g. with an instruction containing the information "Perform a Bluetooth scan periodically every 120 seconds with power level 3".

Figs. 4a and 4b show proximity graphs according to example embodiments.

In Fig. 4a, the various devices are represented by nodes A, B, C, D and E. Device A is in the proximity of all other devices B, C, D and E. Device B is in the proximity of device A (reciprocally) and with devices C and E. Device C is proximal to all other devices, and device D is proximal to devices A and C. Device E is proximal to devices A, B and C. It needs to be noted that the proximity of two devices with each other may be discovered by one device, e.g. device A may discover device D, and it may be deduced that device A is also proximal to device D without device D doing any discovery. That is, proximity may be interpreted to be reciprocal.

In an embodiment, the proximity server PS may orchestrate the devices based on the current and past proximity graph information. The proximity information may thus be stored as a graph as depicted in Figure 4a. The graph edges may have e.g. the following information: 1) a distance between devices, estimated from the discovery and expressed e.g. in meters, 2) time stamp indicating the time when the discovery of the proximity data corresponding to the edge was carried out and 3) additional proximity data, e.g. indicating whether the devices are touching (detected e.g. with NFC), in the same_room, or in the same_building.

In Fig. 4b, the same proximity graph as in Fig. 4a shows properties of the proximity connections (the edges of the graph). For example, the proximity between devices A and E has the properties of a distance of 0.1 meters, the information that the devices are touching (e.g. through NFC), and a time stamp when the proximity was discovered.

The proximity server PS may also keep track of what capabilities each device has for proximity discovery and the status of each technique. This is illustrated in the below table.

| **Device: Device A** | | |
|---|---|---|
| *Sensing technique* | *Status* | *Data* |
| Bluetooth | Active | Device B, Device C |
| GPS | Inactive | - |
| Cell ID | Connected | LAC: 18994 |
| | | Cell ID: 40992 |
| | | MCC: 310 |
| | | MNC: 1040 |
| ... | ... | ... |

In the table, each device (shown here for device A only) may have a list of sensing (discovery) techniques for discovering proximal devices. Such techniques, or discovery channels, may be, as shown, e.g. Bluetooth, GPS, cellular network Cell ID and others. Each discovery channel may have an associated status information such as active, inactive and connected. For each discovery channel, there may be additional proximity information such as discovered proximal device identifiers (shown for Bluetooth), or cell identification information. It needs to be noted that it may be relevant information for the system that no proximal devices have been discovered (found), that is, it can be expected that there are no devices to communicate with. This information can also be stored in the system.

Fig. 4c illustrates finding a proximity fingerprint of interest according to an example embodiment. An example of a current (updated) Proximity Graph is depicted at the top of Fig. 4c. Here an exemplary user may be operating device "A", a point of interest. A's current proximity fingerprint consists of seeing devices "h", "i", "j", and "B". In other words, these are the devices in A's current proximity. However, we can see through "B" that there are devices "k", "l", "m", and "n" nearby. At the bottom left of Fig. 4c, an interest fingerprint, identified and stored earlier by the user, is shown. If we deduce the fingerprints for each device, we can see that the interest fingerprint is found as a sub-graph of k's deducted fingerprint (see bottom right of Fig. 4c). The graph operations may happen e.g. where the proximity graph is stored, like in a cloud.

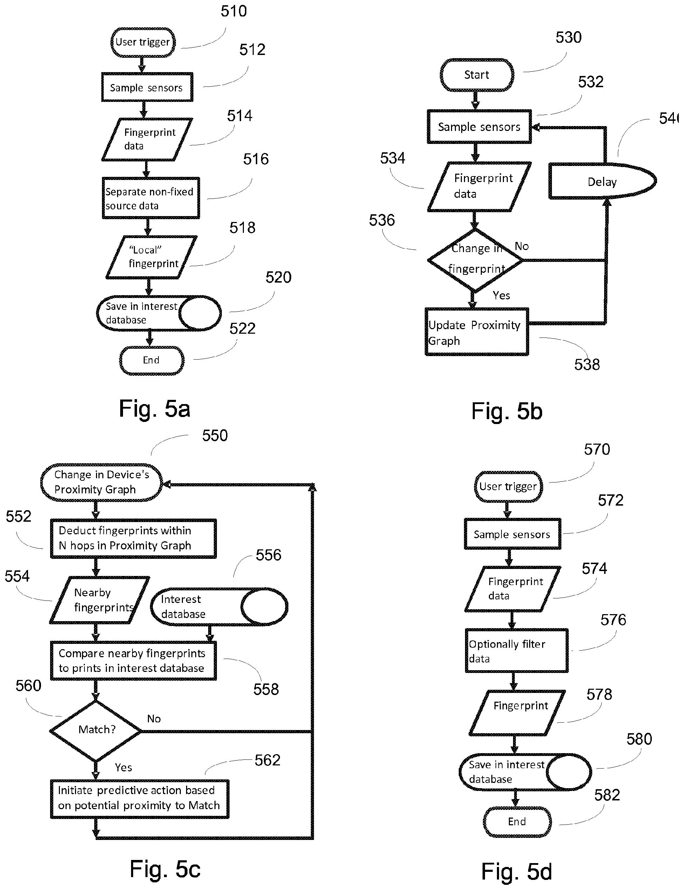

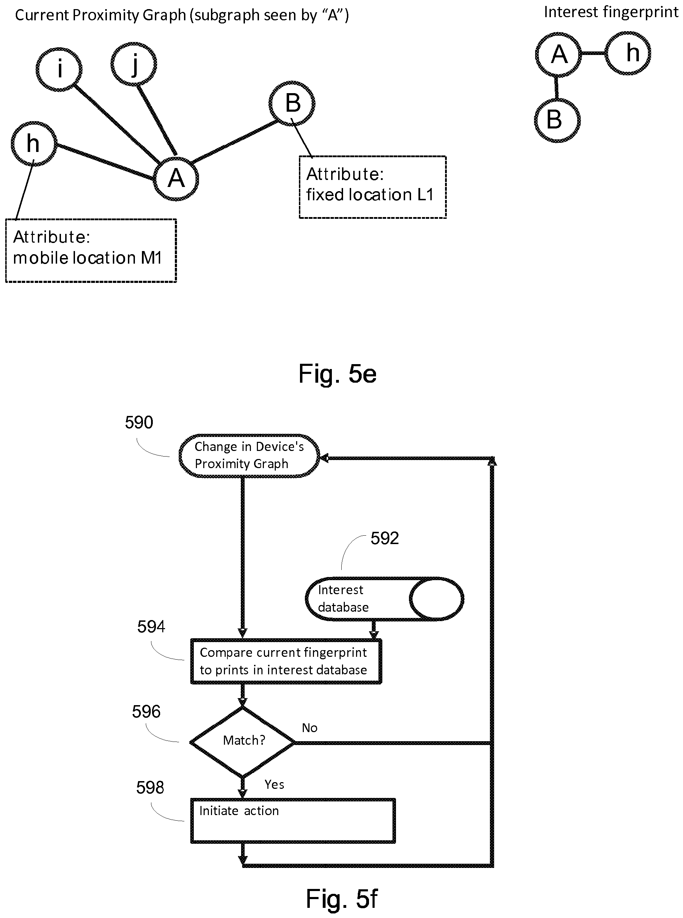

Figs. 5a, 5b, 5c, 5d, 5e and 5f illustrate proximity fingerprint storing and detection according to example embodiments.

In Fig. 5a, using fingerprints from mobile radio sources is shown. Proximity fingerprinting may be used to trigger an action based on the proximity of other devices. One way to store fingerprint data is to store them in a cloud, but a local implementation, e.g. distributed to terminals is also possible. The process begins by populating an interest database of social contexts that have significance for the user. In the simplest case let us assume for this example, that the user wants to be alerted when a specific set of users (their devices) are nearby.

The user initiates 510 the process at which time the sensors are sampled 512 (e.g. the radios) to get the fingerprint data 514. The parts of the fingerprint that can be associated with contexts as defined earlier are extracted in phase 516. For example, the parts of the fingerprint that are from mobile sources are selected. This "local" proximity fingerprint 518 is saved 520 in the interest database, and the process ends 522. The process can be repeated for as many interest points as the user desires.

As the user moves around in the world, the proximity graph of the devices around her are updated. This is depicted in Figure 5b. The process starts 530 by sampling sensors 532 for proximity information 534. When the proximity information (fingerprint data) changes 536, the proximity graph is updated 538 to reflect the new situation. This process keeps repeating after an adjustable delay 540.

The process for matching the interest fingerprints and the deducted fingerprints is depicted in Figure 5c. This is initiated by a change 550 in the device's proximity graph or e.g. a change at maximum M steps away in the proximity graph. Fingerprints are deducted 552 for all devices at maximum N hops away in the graph. M and N are adjustable. In practice, the fingerprints may be cached to improve lookup time and to reduce the amount to graph traversals necessary. This gives us the nearby fingerprints 554 that are cross correlated 558 with the interest database of stored proximity fingerprints 556. If a match 560 is found, an action is initiated 562. In this case we would alert the user that a specific set of users are not in immediate proximity but nearby. That is, the system may adjust its operation by detecting an interesting proximity fingerprint in the vicinity, e.g. by predictively starting a program or setting a program in a certain mode, or by initiating data connection between devices etc.

According to an example, a proximity fingerprint of interest may comprise the defining device (in our example case of Fig. 4c, device "A") in the fingerprint. In this case, also other users may search for interest fingerprints that integrally include the original defining device. The selection of whether to include the defining device depends on the specific circumstances.

According to an example embodiment of Fig. 5d, full radio fingerprints may be used to infer social group as well as an associated place. The following explains how to use both the social group (people) and an associated place to trigger events. For the following example, let's assume that the user wants to set an alert to trigger when the user is in proximity of a person ("h") and at work (identified by fixed-position radio source "B").

Setting the interest fingerprint is basically the same as in the earlier examples, except not all the place related information may be filtered away. That is, based on a user trigger 570, sensors are sampled 572 and fingerprint data is formed 574. The fingerprint data may be filtered 576 using some application specific properties. In an example, the proximity fingerprint 578 contains a social group (people, mobile devices) component and a 'place' (fixed-position device, such as a cellular base station) component. Like it was convenient to assign a symbolic meaning to the mobile devices (e.g., friends, family), it may be convenient to assign a symbolic meaning to the place (e.g. work, home). It is possible but not necessary to have a real geographic location for the 'place', for example stored for the node; the 'place' may just have a symbolic meaning and relations to other 'places' in the proximity graph. It needs to be understood that the 'place' may also be a moving place such as a vehicle like a boat or a train, whereby a user may e.g. detect that three friends (user device fingerprint component) are travelling in the same train (train WLAN name is a fixed-position fingerprint component). The fingerprint may be saved 580, and the process ends (or is repeated).

The proximity graph may be constructed as before, as depicted in Fig. 5e. In this example, the graph may have nodes that are fixed-position devices as well as nodes that are mobile devices. The fixed location is indicated as an attribute of the node in Fig. 5e. As per our ongoing example, the proximity fingerprint of interest (on the right) indicates that we wanted to find the node "h" and the place is fixed with finding "B" simultaneously in proximity of device "A". It is immediately clear that the current proximity graph in Fig. 5e (on the left) fulfills these requirements.

Fig. 5f illustrates a simplified example of determining a match between the proximity graph and a proximity fingerprint of interest. Here, the current fingerprint seen by the user's device "A" is utilized instead of the more complete view of the total proximity graph. That is, the proximity graph of device "A" is truncated to be one step deep, and all devices in the graph are directly in proximity of device "A". When the proximity graph changes 590, this current fingerprint is compared 594 to stored proximity fingerprints of interest 592. If a match is found 596, or at least a partial match, action may be initiated 598.

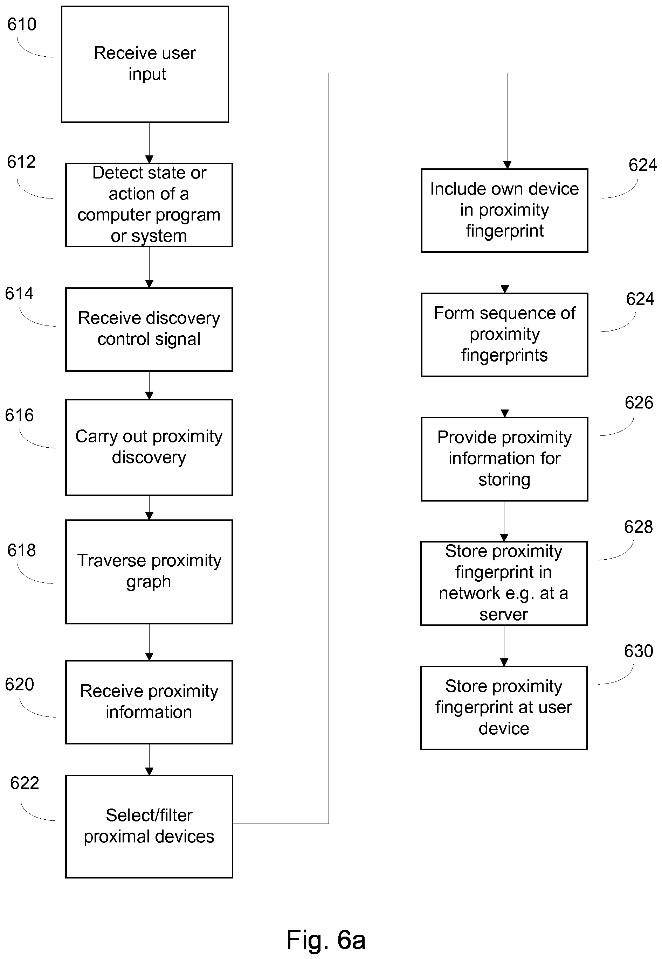

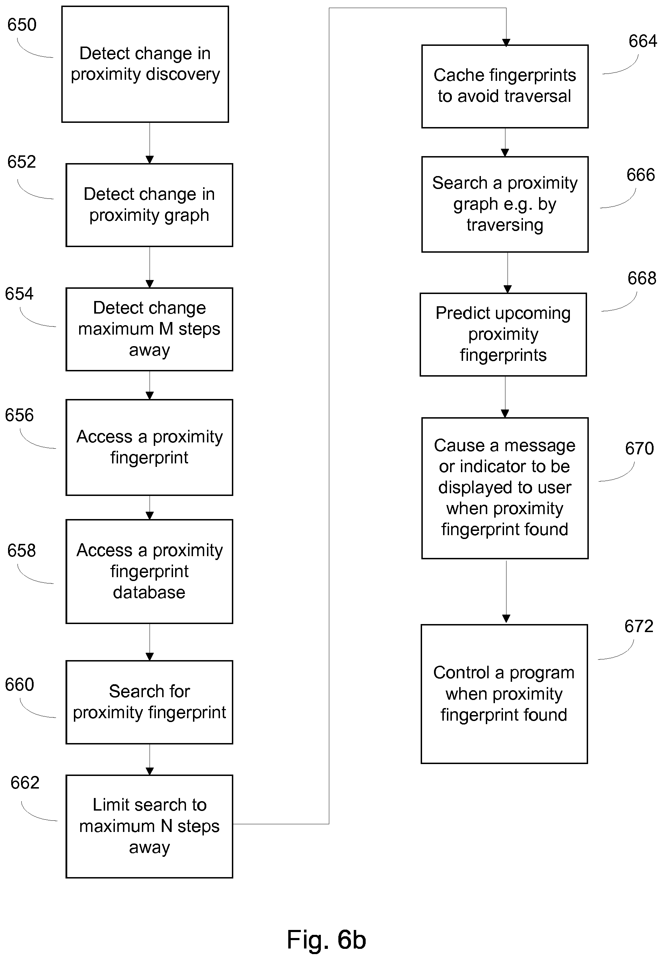

Figs. 6a and 6b show flow charts for discovery of proximal devices by employing proximity fingerprints according to example embodiments.

In Fig. 6a, storing a proximity fingerprint is illustrated. Not all phases below may be carried out, and/or the order of the phases may vary. In phase 610, user input may be received. This may happen so that a user operates on a user interface of a device by e.g. pressing a button, the user moves a device with an accelerometer, e.g. by shaking, tapping etc. or gives a voice command. The user input is received by the system (user device or server) and interpreted as a signal to start the process for storing proximity information.
In phase 612, the state of a program or an action received by a program may be detected. For example, a web browser may receive a user input for carrying out a search, and when a user presses the "search" button, the action may be detected for use with the proximity fingerprint detection. The action or state may be detected at the user device or at a server, e.g. in an internet service.

In phase 614, for carrying out discovery, the user device may receive a discovery control signal according to which a proximity discovery may be carried out in phase 616. Proximity information may also be determined by traversing or analyzing a proximity graph or other proximity information that is available in phase 618. That is, a discovery of proximal devices may or may not be carried out.

In phase 620, the determined proximity information may be received into a memory of a user device, for example from the mass memory of the device itself or from a network server which may send the proximity information. The proximal devices to be used in the proximity fingerprint may then be filtered in phase 622. For example, fixed radio identifiers may be filtered away, and/or some other information may be used e.g. to select the mobile devices to be selected in the proximity fingerprint. In phase 624, the user's own device may be included in the proximity fingerprint information.

For prediction and/or history information, a sequence of proximity fingerprints may be formed in phase 624. For example, the proximity fingerprint may be sampled with a time interval in a repetitive manner. This may enable to form a history of fingerprints, and if the fingerprints have associated time information, for example predictions of the development of the proximity fingerprint may by made. This may enable predicting which devices will be in the vicinity in the future.

In phase 626, the proximity information (proximity fingerprint or a sequence of such) is provided for storing in a database. As explained earlier, the storing may happen at any user device or server, or in both, or in any distributed manner as in phases 628 and 630.

In Fig. 6b, the use of stored proximity fingerprints of interest is illustrated. The fingerprints may be stored in a database or in any other way in various devices. The fingerprints may have descriptive names associated.

In phase 650, a proximity discovery may be carried out, e.g. in a controlled manner as described earlier, and a change of proximal devices may be detected. Alternatively or in addition, or as a following step, a change in the proximity graph for a device may be detected in phase 652. That is, a change in connectivity between devices in the proximity graph or in other proximity information may be detected through analysis. The analysis may be restricted for efficiency and for practicality. For example, changes in the proximity graph may be analysed so that only changes up to 1, 2 or 3 steps (or generally M steps) away are taken into account or detected, as in phase 654.

In phase 656, at least one proximity fingerprint may be accessed. The accessing may take place from a file, directory, database or such at a user device, a server, or a number of devices. A proximity fingerprint database may reside on a server or a user device, and this database may be shared among users, or be specific to a user, and accessed in phase 658.

In phase 660, one or more proximity fingerprints of interest accessed earlier are searched for in the available proximity information. The search may be restricted in scope, for example to proximity information 0, 1, 2, 3 or more (generally N) steps away from the user's device. The search may be carried out either directly by traversing the proximity graph in phase 666, or indirectly by using cached fingerprint information of the graph to avoid traversal in phase 664. The search may also encompass predicting a future development of the proximity graph in phase 668, e.g. based on an earlier stored sequence of proximity graphs.

In phase 670, if a match is found for the proximity fingerprint of interest, a message may be caused to be displayed to a user. For example, a user device may prompt the user of nearby group of friends, or a social media service may highlight nearby friends and their status or their messages. A user device may also alert the user in a minimally disturbing way such as a small beep or by vibration alert when a proximity fingerprint of interest is detected.

In phase 672, if a match is found for the proximity fingerprint of interest, the system, or a program running on the system, or a program running on another system may be controlled based on the found match. For example, a game program may be started when a suitable gaming group is detected. As another example, the nearby friends may be highlighted in a social media service, e.g. their status messages may be brought to the user's attention. Information on the vicinity of a group may be sent to another system, e.g. a status message or status information may be provided to a social media service like "Meeting football friends in Tampere, Finland" based on a detected proximity fingerprint.

Server orchestration (control) of discovery may be used to control the devices' proximity sensing in order to reduce the power consumption on battery powered devices and/or to improve the perceived user experience by controlling the proximity sensing based on current device status. In the described system the devices sensing the proximity of other devices communicate this information to server which maintains the proximity information in a graph. Besides, the proximity information the devices may communicate various kinds of status information (like battery charging level, is the device connected to a charger and various sensor data) to the server.

Discovery control may be carried out, for example, in the following situations:
- Bluetooth optimization by orchestrating the discovery process
- Minimizing proximity sensing on battery-powered devices
- Reducing proximity sensing on devices with low battery
- Reducing proximity sensing in dense device sets
- Using hierarchical proximity information to limit devices from carrying out intensive proximity sensing
- Performing server-side optimizations to reduce the complexity of graph traversal based on hierarchical proximity data
- Minimizing proximity sensing for stationary devices

As an example of orchestrating the measurements of the devices, a Proximity Server PS may instruct device A to start Bluetooth discovery (inquiry) and at the same time, in a synchronized manner, PS is telling device C to start continuous inquiry scanning. In this example devices may be carrying out the discovery for approximately 25 ms for A to get a response, while without synchronization the discovery may take approximately 5-10 s. This advantage may be achieved through time synchronization of devices by the proximity server. Without the proximity server, this synchronization information is not known and a device has to perform long inquiry and the other device has to perform periodic scanning. In addition, Bluetooth discovery may take a lot of time and it may in practice block WLAN operation during discovery. Limiting Bluetooth discovery operation to a shorter period leaves more time to WLAN operation and hence limits the blackouts to WLAN traffic.

Proximity information may comprise information indicative of distance between devices, and an identification of a discovery channel used for discovery. A discovery control signal may comprise timing information e.g. on timing of the discovery of proximal devices to be done, such as a time instance or a frequency of discovery. Timing information may comprise e.g. the next time instance for performing discovery, a series of time instances for performing discovery, a frequency of discovery attempts to be performed, or other time-related information e.g. for delaying discovery by a certain time if another device is detected to be performing discovery or communication at the same time (for collision avoidance). The device may also e.g. randomly modify the received timing. A control signal may comprise information on how the discovery is to be carried out (which channel to use, e.g. Bluetooth or WLAN).

A proximity graph may be formed using the proximity information. For example, the proximity graph may be updated with new information and previous proximity graph information may be stored as history data. A new proximity graph may be formed if a previous proximity graph does not exist. The forming and updating of the proximity graph may employ techniques for spanning a network, e.g. so that the graph is traversed starting from one node using e.g. depth-first or breadth-first traversing.

In one example, the server may obtain proximity information from a first device, e.g. comprising information that a second device is nearby and has been discovered at a certain time. The server may then control the future discovery actions of the first device, and the server may also control the discovery actions of the second device even though the second device has not sent proximity information to the server. In other words, the proximity information, wherever it has been obtained from, may be used to control the discovery of nearby devices by any device regardless of whether or not that device has sent proximity information to the server.

The proximity server PS may control which devices perform the discovery and by which technique, and at which time. The proximity server PS may control each discovery action separately or command a periodic discovery. The device may report the status of its sensing techniques to the server. For example, if GPS positioning is used for some other application and therefore its status is "active" even if the proximity server PS has not instructed to activate the GPS, the proximity server PS can then instruct the device to send GPS location periodically because the GPS is already on.

Each edge in the proximity graph representing proximity between two devices may have a time stamp value indicating when the proximity sensing was carried out. When new sensing information becomes available, the time stamp may be updated. The proximity may be sensed with various techniques, e.g. initial edge in the graph may be created based on NFC (near-field communication) touch gesture and the edge time stamp may be updated based on Bluetooth discovery. In this case also the proximity Distance and Additional proximity data may be updated. Alternatively or in addition, the time stamp may be specific to a discovery channel, i.e. not just to the edge.

The various embodiments may improve the efficiency of proximity detection through the use of proximity information and/or device status information to control the proximal discovery, e.g. by exploiting the characteristics of different radio technologies. For example, it is relatively safe to let two devices that hear different cellular base stations to discover their environment with Bluetooth simultaneously - due to the shorter range of Bluetooth, the discovery signals would not disturb each other (no collision would be caused). Correspondingly, devices hearing the same Wi-Fi (WLAN) access point are likely to be relatively near to each other.

If devices A, B and C are in the proximity of each other, the proximity server PS may instruct the devices to perform the discovery so that their individual sensing periods do not overlap and hence block/disturb the sensing. This may provide the advantage that discovery is more successful than without this orchestrating.

The proximity server PS may command device A to function as a beacon (e.g. by transmitting audio or infrared light) and command devices B and C to listen to that beacon. The proximity server PS may choose any devices that should participate to this, especially to test if devices that are known to be in the proximity (based on some other sensing technique, e.g. Bluetooth) are actually e.g. in the same room. Bluetooth may indicate that the devices are near each other, but if they are not able to observe the beacon, it may be determined that they are not in the same room.

The various embodiments may provide advantages. For example, information of interesting groups of devices may be collected as proximity fingerprints based on a user trigger. Such information may be utilized for various social purposes without tedious definition of groups, for example groups may be formed in social media services based on proximity fingerprints. Detecting proximity fingerprints may offer the opportunity of controlling a user system in a predictive manner, for example by altering or controlling the behavior or programs of the system based on the detected fingerprints. A user may also get information of nearby groups of people in an easy manner according to various embodiments.

The various embodiments described above may be carried out alone or in combination. Different features may be picked from embodiments and recombined. Also, it needs to be understood that above, all different features may not form their individual embodiments, and for example two paragraphs where an example embodiment is described may in fact refer to the same embodiment.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the terminal device to carry out the features of an embodiment. Yet further, a network device may comprise circuitry and electronics for handling, receiving and transmitting data, computer program code in a memory, and a processor that, when running the computer program code, causes the network device to carry out the features of an embodiment.

It is obvious that the present invention is not limited solely to the above-presented embodiments, but it can be modified within the scope of the appended claims.

## Claims

1. A method, comprising:
- receiving (110) a trigger signal at a mobile device, wherein said trigger signal is a signal related to a user action through a user interface,
- receiving a discovery control signal at the mobile device from a proximity server in communication with the mobile device over a network, wherein the discovery control signal controls a proximity discovery at the mobile device based on first proximity information maintained in a proximity graph by the proximity server, wherein a node denotes a mobile device and an edge denotes a proximity of another mobile device;
- carrying out, by the mobile device, the proximity discovery and determining (120) second proximity information descriptive of proximity of other mobile devices to said mobile device, in response to receiving the trigger signal and the discovery control signal, and
- providing (130), by the mobile device, the second proximity information to a proximity fingerprint database to be stored and to the proximity server to update the proximity graph, wherein a proximity fingerprint comprises a set of information descriptive of two or more devices being in proximity to each other.

2. A method according to claim 1, comprising:
- detecting a predetermined action or state of a computer program, and
- forming said trigger signal, in response to said detecting.

3. A method according to any of the claims 1 or 2, comprising:
- selecting a subset of said other mobile devices for said storing.

4. A method according to any of the claims 1 to 3, comprising:
- repeating said providing the second proximity information descriptive of proximity of said other mobile devices to said mobile device in order to store a sequence of proximity fingerprints as a fingerprint history.

5. A method according to any of the claims 1 to 4, comprising:
- providing the second proximity information descriptive of proximity of said other mobile devices to said mobile device together with information of said other mobile devices to be stored.

6. A method according to any of the claims 1 to 5, wherein said determining the second proximity information descriptive of proximity of other mobile devices to said mobile device comprises obtaining the first proximity information from the proximity server.

7. A method according to any of the claims 1 to 6, wherein said determining the second proximity information descriptive of proximity of other mobile devices to said mobile device comprises traversing the first proximity information maintained in the proximity graph by the proximity server.

8. A method according to any of the claims 1 to 7, wherein said proximity fingerprint database resides at least partially on a network server.

9. A method according to any of the claims 1 to 8, wherein said proximity fingerprint database resides at least partially on said mobile device.

10. A system comprising an apparatus for a mobile device, a proximity server and a finger print database, the system being configured to:
- receive (110) a trigger signal at a mobile device, wherein said trigger signal is a signal related to a user action through a user interface,
- receive a discovery control signal at the mobile device from the proximity server in communication with the mobile device over a network, wherein the discovery control signal controls a proximity discovery at the mobile device based on first proximity information maintained in a proximity graph by the proximity server, wherein a node denotes a mobile device and an edge denotes a proximity of another mobile device;
- carry out, by the mobile device, the proximity discovery and determine (120) second proximity information descriptive of proximity of other mobile devices to said mobile device, in response to receiving the trigger signal and the discovery control signal, and
- provide (130), by the mobile device, the second proximity information to the proximity fingerprint database to be stored and to the proximity server to update the proximity graph, wherein a proximity fingerprint comprises a set of information descriptive of two or more devices being in proximity to each other.

11. A system according to claim 10, wherein the system is further configured to perform the method as claimed in any of the claims 2 to 9.

12. A computer program, which when executed by one or more processors is for performing a method according to any of the claims 1 to 9.

## Patentansprüche

1. Verfahren, umfassend:
- Empfangen (110) eines Triggersignals an einem Mobilgerät, wobei das Triggersignal ein Signal ist, das mit einer Benutzeraktion über eine Benutzeroberfläche in Beziehung steht,
- Empfangen eines Entdeckungssteuersignals an dem Mobilgerät von einem Proximity-Server (Nahbereichs-Server) in Kommunikation mit dem Mobilgerät über ein Netzwerk, wobei das Entdeckungssteuersignal eine Nahbereichsentdeckung an dem Mobilgerät basierend auf ersten Nahbereichsinformationen steuert, die durch den Proximity-Server in einem Proximity-Diagramm gepflegt werden, wobei ein Knoten ein Mobilgerät bezeichnet und eine Kante einen Nahbereich eines anderen Mobilgeräts bezeichnet;
- Durchführen der Nahbereichsentdeckung und Ermitteln (120) von zweiten Nahbereichsinformationen, die den Nahbereich anderer Mobilgeräte für dieses Mobilgerät beschreiben, durch das Mobilgerät in Reaktion auf das Empfangen des Triggersignals und des Entdeckungssteuersignals, und
- Bereitstellen (130) der zweiten Nahbereichsinformationen an eine Nahbereichs-Fingerabdruckdatenbank, um gespeichert zu werden, und an den Proximity-Server, um das Proximity-Diagramm zu aktualisieren, durch das Mobilgerät, wobei ein Nahbereichs-Fingerabdruck einen Satz von Informationen umfasst, die beschreiben, dass zwei oder mehr Geräte sich im jeweiligen Nahbereich des anderen befinden.

2. Verfahren nach Anspruch 1, umfassend:
- Detektieren einer vorgegebenen Aktion oder eines vorgegebenen Zustands eines Computerprogramms, und
- Bilden dieses Triggersignals in Reaktion auf das Detektieren.

3. Verfahren nach einem der Ansprüche 1 oder 2, umfassend:
- Auswählen eines Teilsatzes der anderen Mobilgeräte für dieses Speichern.

4. Verfahren nach einem der Ansprüche 1 bis 3, umfassend:
- Wiederholen dieses Bereitstellens der zweiten Nahbereichsinformationen, die den Nahbereich dieser anderen Mobilgeräte beschreiben, an das Mobilgerät, um eine Abfolge von Nahbereichs-Fingerabdrücken als Fingerabdruckhistorie zu speichern.

5. Verfahren nach einem der Ansprüche 1 bis 4, umfassend:
- Bereitstellen der zweiten Nahbereichsinformationen, die den Nahbereich dieser anderen Mobilgeräte für dieses Mobilgerät beschreiben, zusammen mit Informationen dieser anderen Mobilgeräte, um gespeichert zu werden.

6. Verfahren nach einem der Ansprüche 1 bis 5, wobei dieses Ermitteln der zweiten Nahbereichsinformationen, die den Nahbereich anderer Mobilgeräte für dieses Mobilgerät beschreiben, umfasst, dass die ersten Nahbereichsinformationen von dem Proximity-Server erhalten werden.

7. Verfahren nach einem der Ansprüche 1 bis 6, wobei dieses Ermitteln der zweiten Nahbereichsinformationen, die den Nahbereich anderer Mobilgeräte für dieses Mobilgerät beschreiben, umfasst, das die ersten Nahbereichsinformationen, die von dem Proximity-Server in dem Proximity-Diagramm gepflegt werden, durchlaufen werden.

8. Verfahren nach einem der Ansprüche 1 bis 7, wobei diese Nahbereichs-Fingerabdruckdatenbank mindestens teilweise auf einem Netzwerk-Server liegt.

9. Verfahren nach einem der Ansprüche 1 bis 8, wobei diese Nahbereichs-Fingerabdruckdatenbank mindestens teilweise auf dieseem Mobilgerät liegt.

10. System, umfassend eine Vorrichtung für ein Mobilgerät, einen Proximity-Server und eine Fingerabdruckdatenbank, wobei das System konfiguriert ist zum:
- Empfangen (110) eines Triggersignals an einem Mobilgerät, wobei dieses Triggersignal ein Signal ist, das mit einer Benutzeraktion über eine Benutzeroberfläche in Beziehung steht,
- Empfangen eines Entdeckungssteuersignals an dem Mobilgerät von dem Proximity-Server in Kommunikation mit dem Mobilgerät über ein Netzwerk, wobei das Entdeckungssteuersignal eine Nahbereichsentdeckung an dem Mobilgerät basierend auf ersten Nahbereichsinformationen steuert, die durch den Proximity-Server in einem Proximity-Diagramm gepflegt werden, wobei ein Knoten ein Mobilgerät bezeichnet und eine Kante einen Nahbereich eines anderen Mobilgeräts bezeichnet;
- Durchführen der Nahbereichsentdeckung und Ermitteln (120) von zweiten Nahbereichsinformationen, die den Nahbereich anderer Mobilgeräte für dieses Mobilgerät beschreiben, durch das Mobilgerät in Reaktion auf das Empfangen des Triggersignals und des Entdeckungssteuersignals, und
- Bereitstellen (130) der zweiten Nahbereichsinformationen an die Nahbereichs-Fingerabdruckdatenbank, um gespeichert zu werden, und an den Proximity-Server, um das Proximity-Diagramm zu aktualisieren, durch das Mobilgerät, wobei ein Nahbereichs-Fingerabdruck einen Satz von Informationen umfasst, die beschreiben, dass zwei oder mehr Geräte sich im jeweiligen Nahbereich des anderen befinden.

11. System nach Anspruch 10, wobei das System des Weiteren konfiguriert ist, um das Verfahren gemäß einem der Ansprüche 2 bis 9 durchzuführen.

12. Computerprogramm, das bei Ausführung durch einen oder mehrere Prozessoren dazu dient, ein Verfahren gemäß einem der Ansprüche 1 bis 9 durchzuführen.

## Revendications

1. Procédé comprenant :
- réception (110) d'un signal de déclenchement au niveau d'un dispositif mobile, ledit signal de déclenchement étant un signal en rapport avec une action d'utilisateur au travers d'une interface utilisateur,
- réception d'un signal de commande de découverte au niveau du dispositif mobile de la part d'un serveur de proximité en communication avec le dispositif mobile par le biais d'un réseau, le signal de commande de découverte commandant une découverte de proximité au niveau du dispositif mobile en se basant sur des premières informations de proximité maintenues dans un graphique de proximité par le serveur de proximité, un noeud désignant un dispositif mobile et un bord désignant une proximité d'un autre dispositif mobile,
- réalisation, par le dispositif mobile, de la découverte de proximité et détermination (120) de deuxièmes informations de proximité descriptives de la proximité d'autres dispositifs mobiles dudit dispositif mobile, en réponse à la réception du signal de déclenchement et du signal de commande de découverte, et
- fourniture (130), par le dispositif mobile, des deuxièmes informations de proximité à une base de données d'empreintes numériques de proximité à stocker et au serveur de proximité afin de mettre à jour le graphique de proximité, une empreinte numérique de proximité comprenant un ensemble d'informations descriptives de deux dispositifs ou plus qui se trouvent à proximité l'un de l'autre.

2. Procédé selon la revendication 1, comprenant :
- détection d'une action ou d'un état prédéterminé d'un programme informatique et
- formation dudit signal de déclenchement en réponse à ladite détection.

3. Procédé selon l'une quelconque des revendications 1 ou 2, comprenant :
- sélection d'un sous-ensemble desdits autres dispositifs mobiles pour ledit stockage.

4. Procédé selon l'une quelconque des revendications 1 à 3, comprenant :
- répétition de ladite fourniture des deuxièmes informations de proximité descriptives de la proximité desdits autres dispositifs mobiles dudit dispositif mobile afin de stocker une séquence d'empreintes numériques de proximité sous la forme d'un historique d'empreintes numériques.

5. Procédé selon l'une quelconque des revendications 1 à 4, comprenant :
- fourniture des deuxièmes informations de proximité descriptives de la proximité desdits autres dispositifs mobiles dudit dispositif mobile conjointement avec des informations desdits autres dispositifs mobiles à stocker.

6. Procédé selon l'une quelconque des revendications 1 à 5, ladite détermination des deuxièmes informations de proximité descriptives de la proximité d'autres dispositifs mobiles dudit dispositif mobile comprenant l'obtention des premières informations de proximité de la part du serveur de proximité.

7. Procédé selon l'une quelconque des revendications 1 à 6, ladite détermination des deuxièmes informations de proximité descriptives de la proximité d'autres dispositifs mobiles dudit dispositif mobile comprenant la traversée des premières informations de proximité maintenues dans le graphique de proximité par le serveur de proximité.

8. Procédé selon l'une quelconque des revendications 1 à 7, ladite base de données d'empreintes numériques de proximité résidant au moins partiellement sur un serveur de réseau.

9. Procédé selon l'une quelconque des revendications 1 à 8, ladite base de données d'empreintes numériques de proximité résidant au moins partiellement sur ledit dispositif mobile.

10. Système comprenant un appareil pour un dispositif mobile, un serveur de proximité et une base de données d'empreintes numériques, le système étant configuré pour :
- recevoir (110) un signal de déclenchement au niveau d'un dispositif mobile, ledit signal de déclenchement étant un signal en rapport avec une action d'utilisateur au travers d'une interface utilisateur,
- recevoir un signal de commande de découverte au niveau du dispositif mobile de la part du serveur de proximité en communication avec le dispositif mobile par le biais d'un réseau, le signal de commande de découverte commandant une découverte de proximité au niveau du dispositif mobile en se basant sur des premières informations de proximité maintenues dans un graphique de proximité par le serveur de proximité, un noeud désignant un dispositif mobile et un bord désignant une proximité d'un autre dispositif mobile,
- faire réaliser, par le dispositif mobile, la découverte de proximité et déterminer (120) des deuxièmes informations de proximité descriptives de la proximité d'autres dispositifs mobiles dudit dispositif mobile, en réponse à la réception du signal de déclenchement et du signal de commande de découverte, et
- fournir (130), par le biais du dispositif mobile, les deuxièmes informations de proximité à une base de données d'empreintes numériques de proximité à stocker et au serveur de proximité afin de mettre à jour le graphique de proximité, une empreinte numérique de proximité comprenant un ensemble d'informations descriptives de deux dispositifs ou plus qui se trouvent à proximité l'un de l'autre.

11. Système selon la revendication 10, le système étant en outre configuré pour mettre en oeuvre le procédé selon l'une quelconque des revendications 2 à 9.

12. Programme informatique qui, lorsqu'il est exécuté par un ou plusieurs processeurs, est destiné à mettre en oeuvre un procédé selon l'une quelconque des revendications 1 à 9.
